# EUROPEAN PATENT SPECIFICATION

(11) **EP 2 948 364 B1**
(45) Date of publication and mention of the grant of the patent: **21.03.2018**
(21) Application number: 14742994.8
(22) Date of filing: 27.01.2014
(51) Int. Cl.: B62K 23/08, B60G 17/00, B62J 25/00

(54) **A SYSTEM AND A METHOD FOR CONTROL OF MOTORCYCLE SUSPENSION**
SYSTEM UND VERFAHREN ZUR STEUERUNG EINER MOTORRADFEDERUNG
SYSTÈME ET PROCÉDÉ DE COMMANDE DE SUSPENSION DE MOTOCYCLETTE

(30) Priority: 28.01.2013 LV 130004
(43) Date of publication of application: 02.12.2015
(73) Proprietor: Mundi, Maris Ralfs, 1050 Riga (LV)
(72) Inventor: Mundi, Maris Ralfs, 1050 Riga (LV)
(74) Representative: Kuzjukevica, Lucija
(86) International application number: PCT/LV2014/000001
(87) International publication number: WO 2014/116092

(56) References cited:
- EP-A1- 0 466 196
- JP-A- H06 127 453
- JP-A- H06 127 453
- JP-A- S60 199 782
- JP-A- S60 199 782
- JP-A- JPH11 310 176
- SU-A1- 1 022 857
- US-A1- 2005 060 083

## Description

### Field of the invention

The present invention relates to a system and a method for improving handling characteristics of a motorcycle in braking and/or cornering, especially for controlling front suspension characteristics.

### Background of the invention

The prior art proposes various systems and methods that include a means for automatically controlling motorcycle suspension characteristics.

U.S. Patent No. 6,360,148 describes an apparatus that can automatically sense the magnitude of at least one electrical input signal, automatically process each input signal through a microprocessor and associated software algorithm to determine an optimum damping rate, and automatically generate an electrical output signal corresponding to the optimum damping rate. The output signal is configured for communication with a hydraulic damper having means for automatically controlling the damping rate according to an electrical signal. Electrical input signals correspond to variables including engine speed, wheel speed, throttle position, vehicle operator position, and suspension position.

U.S Patent No. 6,876,909 describes an ECU (electronic control unit) of an ECS (electronically controlled suspension) apparatus has a determination block for determining whether the TPS (throttle position sensor) signal rises to be greater than a first reference value and for determining whether the TPS signal declines to be less than a second reference value; and a damper control block, which adjusts a damping force of the front damper according to the determination result. The damper control block sets the front damper into a hard rebound mode when the determination block determines that the TPS signal rises to be greater than the first reference value, and then the damper control block sets the front damper into a hard compression mode when the determination block determines that the TPS signal declines to become less than the second reference value.

Both previously described systems use electronic control without or minimal intervention from a racer. For racing riders such systems are considered to be quite confusing, because electronic systems work on their own algorithm and the rider itself cannot control them. During extreme modes this can raise confusion between the rider and motorcycle, which is not desirable during the racing or extreme driving.

JP S60 199782 A discloses a control mechanism for a rear suspension of a motorcycle. The stiffness of the rear suspension is controlled by a suspension adjusting device, wherein said device can be set in two regimes by foot rest for a passenger of the motorcycle.

Further relevant prior art can be found in JP H06 127453 A which is considered as forming the closest prior art and discloses all of the features of the preamble of claim 1, and which discloses a damping force regulating device for suspension of a motorcycle. The damping force is controlled by operations parts displaced on the handle bar of the motorcycle.

There have been researches and developments to design a suspension control system that can be controlled by the rider. Honda® introduced its TRAC system (Torque Reactive Anti-Dive Control) to cope with dive problems. Said anti-dive system was linked to the brake hydraulic system. TRAC system has a supplemental hydraulic cylinder mounted on the front of the fork legs, which was connected to both the brake lines and the hydraulic fluid inside the telescopic forks. The idea was that as rider applied the front brakes, this unit would use the pressure in the brake line against a plunger to close a control valve. This valve restricts the flow of fork oil and thus stiffness the front suspension. Stiffer front suspension means lesser dive. This was a way of affecting how much the anti-dive plunger moved, which meant the rider could make the anti-dive more or less severe. The disadvantage of the system was that during the braking on a bumpy surface, the front suspension stiffened up and all road bumps and deformities were transmitted up the now-stiffened suspension into the frame of the bike, and consequently, the rider. Said control of the suspension depends on brake lever movement by riders hand and cannot be controlled independently.

### Objective and summary of the invention

A goal of the invention is to provide control system for a front wheel suspension of a motorcycle that can operate in an ergonomically favourable manner and be controlled directly by the rider during the riding, especially during heavy braking or cornering.

This goal is achieved by designing a system for controlling motorcycle front suspension that includes front wheel suspension constituted by fork, comprising at least one spring and at least one damper, and a wheel. Said control system also comprises an adjusting mechanism operable to change the stiffness and/or damping characteristics of the front wheel suspension.

System according to the invention is characterized in that the front suspension control device further comprises an actuator disposed at one side of the motorcycle in proximity of rider's knee and operatively connected to the adjusting mechanism. The actuator is configured to be manually controlled by the rider's knee, in result of which the stiffness and/or dampening characteristics of the front wheel suspension can be controlled. The actuator can be arranged on a fuel tank or on a frame of the motorcycle. The main feature is that the actuator shall be arranged so that it can be reached by the rider's knee.

Said system can be used to control stiffness as well as dampening characteristics of a motorcycle. Stiffness can be controlled by changing performance characteristics of a spring. Dampening can be controlled by changing performance characteristics of a damper. Said control can be achieved by use of a adjusting mechanism or directly by the actuator.

Additionally the system comprises a knee support member disposed at a side of a fuel tank or a frame of the motorcycle in proximity of rider's knee, and said actuator is installed in a knee support member and operatively connected to the adjusting mechanism.

Thus the knee support member and the actuator are disposed in ergonomically favourable position on the motorcycle for controlling a front wheel suspension. Rider controls the stiffness and/or damping of the front wheel suspension independently from any other control means (brake lever and/or pedal; gas control) by using his/her knee.

The knee support member with the actuator is installed on each side of the fuel tank so that for each rider's knee there is one knee support member and the actuator.

In one embodiment the actuator can be a pedal driven master cylinder hydraulically connected to the adjusting mechanism of the front wheel suspension. The actuator can be pneumatic or mechanical mechanism.

In other embodiment the actuator can be a pedal driven potentiometer electrically connected to the adjusting mechanism of the front wheel suspension. Such embodiment exploits elements used in drive-by-wire systems. The pedal driven potentiometer can be replaced by a knob, a lever or piezometer element. Generally, the actuator is a means adapted to receive an input from the rider's knee and transfer said input to the adjusting mechanism or directly to the front wheel suspension.

Further the actuator can be directly connected to the front wheel suspension omitting the adjusting mechanism. In this case the front wheel suspension is designed to comprise a means that can change the stiffness and/or dampening of suspension directly using commands from the actuator.

In another embodiment each actuator can comprise at least two control buttons or levers, where each button or lever works in different predetermined way. One button or lever can be responsible for changing the stiffness and/or dampening of suspension in on/off regime, but another one can be responsible for changing the stiffness and/or dampening of suspension gradually.

Invention also includes a method for controlling the stiffness and/or dampening characteristics of a front wheel using the adjusting mechanisms and especially the actuator and its knee support member. During the braking of the motorcycle a rider controllably pushes its knee against the knee support member, and if the rider feels that stiffness and/or dampening characteristics of the front wheel suspension should be changed then rider also pushes its knee against the actuator, which in turn via the adjusting mechanism controls the stiffness and/or dampening characteristics of the front wheel suspension. Said stiffness and/or dampening of suspension can be controlled in different regimes. One type of control can work in on/off regime, but another one can work by gradually changing the stiffness and/or dampening of suspension, making it harder or softer.

Advantages of said motorcycle suspension control system are as follows: the motorcycle front suspension stiffness and/or damping control can be operable in an ergonomically favourable manner; and be controlled directly by the rider during the ride, especially during braking or heavy braking and cornering in extreme regimes. Very importantly, it is not controlled by rider's hands, and reduces load on rider's hands during braking, thus, reducing overall fatigue, risk of carpal tunnel syndrome and numerous other advantages.

Additionally a rider can choose not to activate the front wheel suspension system due to configuration of a corner or due to road conditions, but nevertheless use ergonomic advantages of previously described knee support - therefore decreasing a force acting on hands of the rider due to weight transfer to the hands.

### Brief description of the drawings

Fig. 1 illustrates a schematic side view of a motorcycle comprising a knee support member **10** and an actuator **20.** The actuator **20** via the knee support member **10** is mounted on a fuel tank **7.**
Fig. 2 illustrates a preferred embodiment of the present invention where the actuator **20** is a pedal driven master cylinder **21** hydraulically connected to an adjusting mechanism **6** of the front wheel suspension **1.** Said elements are shown schematically.
Fig. 3 illustrates a motorcycle with installed knee support member **10** on fuel tank **7** in proximity of intended position for rider's **9** knees **8.**
Fig. 4 illustrates a motorcycle in another view showing both knee support members **10** on each side of a fuel tank **7,** as well as actuators on each knee support member **10.**

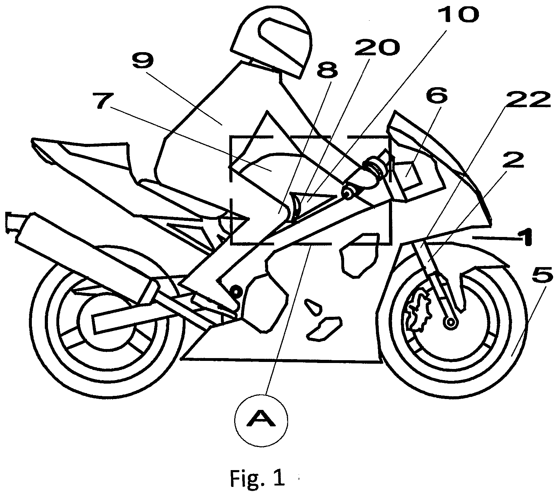

A system (see Fig 1.) for controlling a motorcycle front suspension comprising a front wheel suspension **1** comprising fork **2** and a **wheel 5** and an adjusting mechanism **6** adapted to change the stiffness and/or dampening characteristics of a front wheel suspension **1.** The system further comprises an actuator **20** installed on a side of a bike near the rider's **9** knee **8** position. The actuator **20** is operatively connected to the adjusting mechanism **6,** and is configured to be controlled by the rider's **9** knee **8,** in result of which the stiffness and/or dampening characteristics of the front wheel suspension **1** can be changed. In the given embodiment the actuator **20** is installed in a knee support member **10,** which in turn is attached to a fuel tank **7** of the motorcycle.

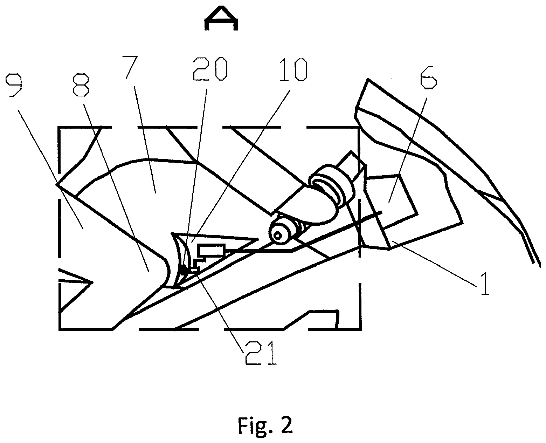

In other embodiment the actuator **20** is pedal driven master cylinder **21,** which is hydraulically connected to an adjusting mechanism **6** of the front wheel suspension **1.** Said embodiment is shown in Fig. 2. During the braking or cornering of the motorcycle the rider **9,** depending on his/her considerations, pushes its knee **8** against the actuator **20** and therefor can control the stiffness of the front wheel suspension **1.**

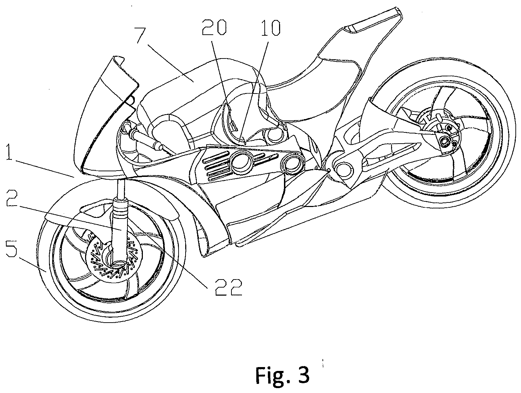

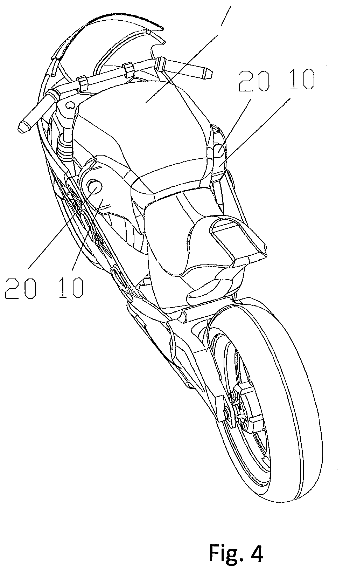

Fig. 3 and Fig. 4 show preferred installation position for knee support member **10** and the actuators **20** that are installed on each knee support member **20.** The knee support members **20** are designed so as to be ergonomically adapted for rider's **9** knee **8.** Additionally, the knee support members **20** are designed so that they do not protrude outside motorcycle streamlined body.

## Claims

1. A system for controlling a motorcycle front suspension comprising:
- a front wheel suspension (1) comprising fork (2) and a wheel (5);
- an adjusting mechanism (6) adapted to change stiffness and/or dampening characteristics of a front wheel suspension (1);
**characterized in that** the system further comprises:
- an actuator (20) installed on a bike in proximity of rider's knee (8) and operatively is connected to the adjusting mechanism (6), wherein the actuator (20) is configured so that by pushing rider's knee (8) against said actuator (20) the stiffness and/or dampening characteristics of the front wheel suspension (1) can be controlled.

2. The system according to claim 1, **characterized in that** the actuator (20) is installed on each side of the motorcycle so that for each rider's knee (8) there is one actuator (20).

3. The system according to claim 2, **characterized in that** the actuator (20) is installed on each side of a fuel tank (7) of the motorcycle so that for each rider's knee (8) there is one actuator (20).

4. The system according to claim 2, **characterized in that** the system further comprises a knee support member (10) on which the actuator (20) is installed.

5. The system according to claim 1 or 2, **characterized in that** the actuator (20) can be a crank driven master cylinder (21) hydraulically connected to the adjusting mechanism (6) of the front wheel suspension (1).

6. The system according to claim 1 or 2, **characterized in that** the actuator (20) can be a knob driven potentiometer (22) electrically connected to the adjusting mechanism (6) of the front wheel suspension (1).

7. The system according to any one of the preceding claims, **characterized in that** the actuator (20) is directly connected to the front wheel suspension (1).

8. Method for controlling a motorcycle front suspension according to any of the preceding claims wherein during the braking and/or cornering of the motorcycle if the rider (9) feels that stiffness and/or dampening characteristics of the front wheel suspension (1) should be changed, then the rider (9) controllably pushes one of its knees (8) against the actuator (20), which in turn via the adjusting mechanism (6) controls the stiffness and/or dampening characteristics of the front wheel suspension (1).

## Patentansprüche

1. System zur Steuerung einer Vorderradaufhängung eines Motorrads, bestehend aus:
- einer Vorderradaufhängung (1) mit einer Gabel (2) und einem Rad (5);
- einem Einstellmechanismus (6), der so angepasst ist, dass er die Steifigkeit und/oder Dämpfungseigenschaften einer Vorderradaufhängung (1) ändert;
**dadurch gekennzeichnet, dass** das System außerdem umfasst:
- einen Aktuator (20), der an einem Motorrad in der Nähe des Knies (8) des Fahrers angebracht ist und operativ mit dem Einstellmechanismus (6) verbunden ist, wobei der Aktuator (20) so konfiguriert ist, dass durch Drücken des Knies (8) des Fahrers gegen den Aktuator (20) die Steifigkeits- und/oder Dämpfungseigenschaften der Vorderradaufhängung (1) angepasst werden können.

2. System nach Anspruch 1, **dadurch gekennzeichnet, dass** der Aktuator (20) auf jeder Seite des Motorrads so angebracht ist, dass für jedes Knie (8) des Fahrers ein Aktuator (20) vorhanden ist.

3. System nach Anspruch 2, **dadurch gekennzeichnet, dass** der Aktuator (20) auf jeder Seite eines Kraftstofftanks (7) des Motorrads so angebracht ist, dass für jedes Knie (8) des Fahrers ein Aktuator (20) vorhanden ist.

4. System nach Anspruch 2, **dadurch gekennzeichnet, dass** das System weiterhin ein Kniestützelement (10) umfasst, auf dem der Aktuator (20) montiert ist.

5. System nach Anspruch 1 oder 2, **dadurch gekennzeichnet, dass** der Aktuator (20) ein kurbelgetriebener Hauptzylinder (21) sein kann, der hydraulisch mit dem Verstellmechanismus (6) der Vorderradaufhängung (1) verbunden ist.

6. System nach Anspruch 1 oder 2, **dadurch gekennzeichnet, dass** der Aktuator (20) ein Potentiometer mit Drehknopfantrieb (22) sein kann, das elektrisch mit dem Verstellmechanismus (6) der Vorderradaufhängung (1) verbunden ist.

7. System nach einem der vorstehenden Ansprüche, **dadurch gekennzeichnet, dass** der Aktuator (20) direkt mit der Vorderradaufhängung (1) verbunden ist.

8. Verfahren zur Regelung der Vorderradaufhängung eines Motorrads gemäß einer der vorstehenden Ansprüche, wobei während des Bremsens und/oder Kurvenfahrens des Motorrads, wenn der Fahrer (9) das Gefühl hat, dass die Steifigkeit und/oder die Dämpfungseigenschaften der Vorderradaufhängung (1) geändert werden sollten, der Fahrer (9) eines seiner Knie (8) gegen den Aktuator (20) drückt, der wiederum über den Einstellmechanismus (6) die Steifigkeits- und/oder Dämpfungseigenschaften der Vorderradaufhängung (1) steuert..

## Revendications

1. Un système de commande du support de suspension avant du motocycle comprenant le suivant:
- un support de suspension de roue avant (1) comprenant une fourche (2) et une roue (5);
- un mécanisme de réglage (6) adapté pour modifier les caractéristiques de rigidité et/ou d'amortissement du support de suspension de roue avant (1);
qui sont caractéristiques et en outre, le système comprend le suivant:
- un actionneur (20) installé sur le motocycle à proximité du genou du conducteur (8) et fonctionnellement connecté au mécanisme de réglage (6), puisque l'actionneur (20) est configuré de manière à pousser le genou du conducteur (8) contre ledit actionneur (20), on peut contrôler les caractéristiques de rigidité et/ou d'amortissement du support de suspension de roue avant (1).

2. Conformément à la caractéristique déclarée 1, le système **est caractérisé par** l'actionneur (20) qui est installé de chaque côté du motocycle de sorte que pour chaque genou (8) du conducteur, il y a un actionneur (20).

3. Conformément à la caractéristique déclarée 2, le système **est caractérisé par** l'actionneur (20) qui est installé de chaque côté du réservoir de carburant (7) du motocycle de sorte que pour chaque genou (8) du conducteur il y a un actionneur (20).

4. Conformément à la caractéristique déclarée 2, le système **est caractérisé par le fait que** ce dernier comprend aussi un élément de support de genou (10) sur lequel est installé l'actionneur (20).

5. Conformément à la caractéristique déclarée 1 ou 2, le système **est caractérisé par le fait que** l'actionneur (20) peut être un maître-cylindre entraîné par manivelle (21) relié hydrauliquement au mécanisme de réglage (6) du support de suspension de roue avant (1).

6. Conformément à la caractéristique déclarée 1 ou 2, le système **est caractérisé par le fait que** l'actionneur (20) peut être un potentiomètre à bouton (22) relié électriquement au mécanisme de réglage (6) du support de suspension de roue avant (1).

7. Conformément à une des caractéristiques déclarées précédentes, le système **est caractérisé par le fait que** l'actionneur (20) est directement relié au support de suspension de roue avant (1).

8. La méthode de commande du support de suspension avant du motocycle conformément à une des caractéristiques déclarées précédentes prévoit que lorsque le conducteur (9) ressent que les caractéristiques de rigidité et/ou d'amortissement du support de suspension de roue avant (1) lors du freinage et/ou des virages doivent être modifiées, le conducteur (9) pousse de manière contrôlée l'un de ses genoux (8) contre l'actionneur (20), qui à son tour via le mécanisme de réglage (6) contrôle les caractéristiques de rigidité et/ou d'amortissement du support de suspension de roue avant (1).
